# EUROPÄISCHE PATENTANMELDUNG

(11) **EP 1 469 130 A1**
(43) Veröffentlichungstag der Anmeldung: **20.10.2004**
(21) Anmeldenummer: 03405258.9
(22) Anmeldetag: 14.04.2003
(51) Int. Cl.: E01F 7/04

(54) **Bremselement**

(71) Anmelder: AVT Anker + Vorspanntechnik AG, CH-1712 Tafers (CH)
(72) Erfinder: Von Allmen, Hans Peter, 1712 Tafers (CH)
(74) Vertreter: Störzbach, Michael Andreas

(57) **Zusammenfassung**

Ein Bremselement (14) zum Einsatz in Vorrichtungen zum Aufhalten bewegter Massen wie fallender Stein- oder Eisblöcke (4) besteht im Wesentlichen aus einem stabförmigen Profil (20), das zu einer Spirale gewunden ist. Bevorzugt wird ein Profil (20) aus relativ weichem Stahl verwendet, das in kaltem Zustand verformt wird, wobei zugleich eine spürbare Verfestigung auftritt. Das Bremselement (14) weist bei geringer Baulänge eine überraschend grosse Energieabsorptionsfähigkeit auf, wobei keine Anfangskraftspitze und im grössten Teil der Streckung (34) der Spirale eine relativ konstante bis leicht ansteigende Bremskraft auftritt.

## Beschreibung

Die Erfindung bezieht sich auf Bremselemente, gemäss Oberbegriff des Anspruches 1. Insbesondere finden die Bremselemente Einsatz in Rückhalteseilen von Steinschlag- und/oder Eisschlagverbauungen mit zwischen Stützen und/oder Tragseilen aufgespannten Auffangnetzen.

Vorrichtungen zum Bremsen bewegter Massen der Art, auf die sich die Erfindung bezieht, finden sich z.B. als Steinschlag- und Eisschlagverbauung im Gebirge. Die eigentliche Rückhaltevorrichtung, in der Regel ein Netz, das von Stützen gehalten wird, ist mit Rückhalteseilen, die von den Stützen zu Ankern im Boden verlaufen, am Untergrund verankert. Um ein Reissen bei Aufprall eines Körpers zu verhindern, werden Bremselemente in die Rückhalteseile eingebaut.

Im Ereignisfall springen die Bremselemente nach Überschreiten vorbestimmter Zugkräfte in den beanspruchten Rückhalteseilen der Stützen an. Dabei wird über den von den Bremselementen zurückgelegten Bremsweg die kinetische Energie der abgefangenen Steine oder Eismassen absorbiert.

Insbesondere bei einem Einschlag in unmittelbarer Stützennähe oder bei direkten Stützentreffern mit einer Energie, die grösser als ca. 50% der maximalen Gebrauchsenergie der Verbauung ist, ist es erforderlich, dass die in die Rückhalteseile der betroffenen Stütze integrierten Bremselemente einen langen Bremsweg durchfahren können, d.h. mindestens das 1- bis 1,5-fache der Stützenlänge. Wenn der mögliche Bremsweg zu kurz ist, kann die Energie von den in diesem Fall in der Anfangsphase fast ausschliesslich wirkenden Bremselementen in den Rückhalteseilen der betroffenen Stütze nicht genügend absorbiert werden, was unweigerlich zu einem Bruch im System Stütze - Rückhalteseil - Bremselement - Verankerung führt.

Es sind Bremselemente bekannt, die durch das Zusammenziehen von verrohrten und mit Presshülsen versehenen (z.B. EP 494 046) oder direkt durch ein Lochblech geschlauften (z.B. CH 668 300) Seilschlaufen zum Teil oder vorwiegend als Reibungsbremse funktionieren. Bei den vorwiegend als Reibungsbremse funktionierenden Bremselementen ergibt sich die Problematik, dass die Reibungskräfte nach Überwinden der Haftreibung, die in der Startphase eine Kraftspitze im Kraft-Weg Diagramm erzeugt, auf das Niveau der Gleitreibung absinken. Zudem sind die Reibungskräfte abhängig von verschiedenen schwankenden und zufallsbedingten Einflussgrössen, wie dem Spannungszustand allfälliger Presshülsen, Klemmen und dgl., der Änderung des Gleitreibungskoeffizienten bei Erhitzung der Bremselemente bei zunehmender Länge des Bremsweges im Belastungsfall, etc.

Diese Mängel haften grundsätzlich allen zum Teil oder vorwiegend nach der Art einer Reibungsbremse funktionierenden Bremselementen an und machen diese für lange und schnell zu durchfahrende Bremswege eher ungeeignet.

Weiter sind Bremselemente bekannt, die sich das Abscheren von Material (FR 2 673 253) oder die plastische Verformung (DE 195 20 724) von in der Rückhalteseilachse positionierten Elementen durch die gegenläufige Bewegung der sich im Bereich dieser Elemente überlappenden Seile zunutze machen. Diese Bremselemente müssen mindestens die gesamte Länge des gewünschten Bremsweges aufweisen, was bei langen Bremswegen bei beschränkten Platzverhältnissen für die Platzierung der Verbauung und der Verankerungen nachteilig ist.

Weiter sind Bremselemente bekannt, die zu einem Rohr aufgestapelte Rohrringe durch eine Seilschlaufe, die in das Rohr eingelegt ist, verformen und zerreissen (EP 1 156 158). Diese Bremselemente müssen mindestens die halbe Länge des gewünschten Bremsweges aufweisen, was bei langen Bremswegen wegen der rechtwinklig zu den Rückhalteseilen abstehenden Bremselementen deren Platzierungsmöglichkeiten einschränkt. Zudem treten an den Zerreissstellen 90°-Umlenkungen des Seiles und scharfkantige Bruchstellen der Ringe auf, was unter Umständen zu einer Beschädigung oder einem Bruch des Seiles führen kann.

Eine Aufgabe der vorliegenden Erfindung ist daher, ein Bremselement anzugeben, das ein besseres Kraft-Weg-Verhalten aufweist. Eine andere Aufgabe der Erfindung besteht darin, ein Bremselement anzugeben, das einen geringeren Platzbedarf aufweist.

Ein Bremselement, das die erstgenannte Aufgabe löst, ist im Anspruch 1 angegeben. Die weiteren Ansprüche geben bevorzugte Ausführungsformen und Anwendungen des erfindungsgemässen Bremselementes an, wobei wenigstens in einer Ausführung auch die zweitgenannte Aufgabe gelöst ist.

Ein ideales Bremselement für lange Bremswege wirkt mit einer in der Startphase stetig ansteigenden, über den Bremsweg in etwa konstanten Bremskraft, wodurch die zu bremsende Last eine konstante Verzögerung erfährt und dadurch bei einer vorgegebenen maximalen Verzögerung bzw. Bremskraft auf dem kürzest möglichen Bremsweg zum Stillstand gebracht werden kann. Für die Verwendung in Steinschlag- und/oder Eisschlagverbauungen ist es zudem wegen Einschlägen in unmittelbarer Stützennähe oder direkten Stützentreffern erforderlich, dass die Bremselemente einen möglichen Bremsweg von mindestens der 1- bis 1,5-fachen Stützenlänge bzw. von mehreren Metern aufweisen. Die Bremselemente sollten aus Platzierungsgründen in der Verbauung eine möglichst kurze Baulänge aufweisen und in der Achse der Rückhalteseile positioniert sein.

Demgemäss hat das erfindungsgemässe Bremselement im Wesentlichen die Form einer schraubenförmigen Spirale (Helix). Die Spirale ist aus einem stabförmigen Profil gebogen, das aus einem verformbaren Material besteht. In der bevorzugten Ausführungsform wird ein relativ weicher Stahl verwendet, der bei der Verformung zur Spirale im kalten Zustand zugleich eine Verfestigung erfährt.

Ein anderer Aspekt der bevorzugten Ausführungsformen besteht darin, dass eine Spirale mit möglichst geringem Durchmesser gebildet wird. Dadurch wird nicht nur eine kleinere Bauform erreicht, die u.a. besser transportabel ist, sondern auch eine grösstmögliche Kaltverfestigung erzielt.

Die bevorzugte Ausführungsform ist somit ein konstruktiv einfaches Bremselement kurzer Baulänge für Rückhalteseile von Steinschlag- und/oder Eisschlagverbauungen, dessen Bremskraft nach einem stetigen Anstieg auf eine vorgewählte Bremskraft anschliessend über den grössten Teil des Bremsweges hinweg in etwa konstant bleibt bzw. noch leicht ansteigt und am Ende des Bremsweges stetig auf die Bruchlast des Seiles ansteigt und dessen möglicher Bremsweg mindestens das 1- bis 1,5-fache der Stützenlänge der Verbauung bzw. mehrere Meter beträgt.

Das Bremselement absorbiert die kinetische Energie, die bei der Bremsung anfällt, vorwiegend durch plastische Verformungsarbeit bei der Streckung der Windungen der Spirale.

Die Vorteile solcher Bremselemente liegen darin, dass ihnen weder die erwähnten Mängel der nach Art einer Reibungsbremse funktionierenden Bremselemente noch die Gefahr der Seilbeschädigung anhaften und sie auch eine optimal kurze Baulänge bei einem möglichen langen Bremsweg aufweisen.

Die Erfindung wird weiter an einem bevorzugten Ausführungsbeispiel unter Bezugnahme auf Figuren erläutert.
Es zeigen:
- Fig. 1: Schematische Seitenansicht auf eine Steinschlagschutzvorrichtung;
- Fig. 2: Bremskraft-Bremsweg-Diagramm für ein erfindungsgemässes Bremselement;
- Fig. 3: eine Seitenansicht eines Bremselementes;
- Fig. 4: eine Seitenansicht eines Bremselementes in gestrecktem Zustand; und
- Fig. 5: einen Längsschnitt gemäss V - V in Fig. 3.

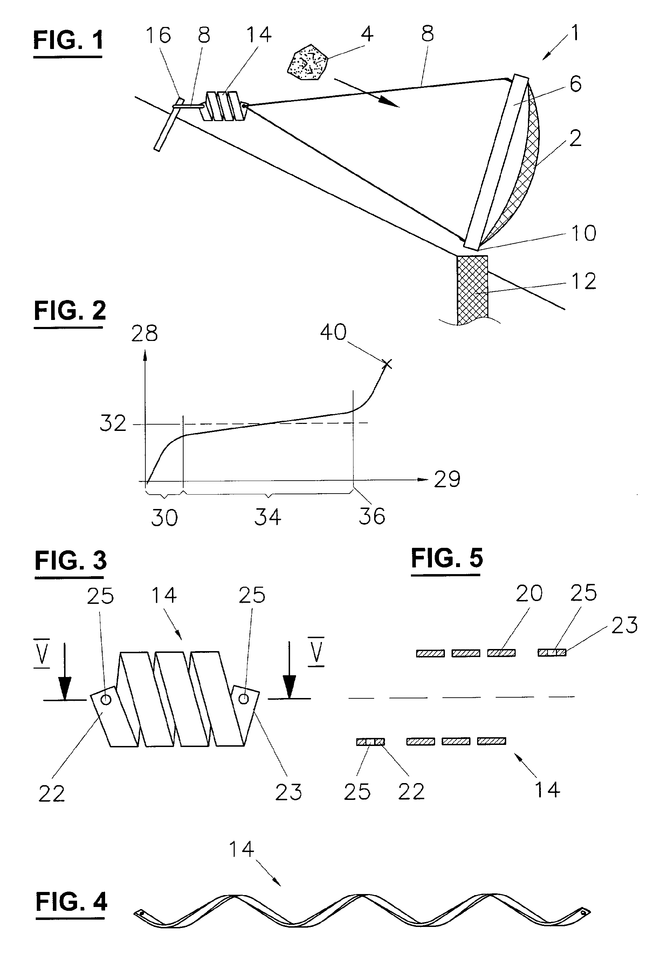

Wie Fig. 1 zeigt, besteht eine bekannte Art der Steinschlag- und/oder Eisschlagschutzvorrichtung 1 darin, dass bergseits der zu schützenden Objekte Auffangnetze 2 aufgespannt werden, die herunterstürzende Steine oder Eismassen 4 abfangen und zum Stillstand bringen. Die Auffangnetze 2 werden in einer Ebene aufgespannt, die aus Stützen 6 und Tragseilen gebildet wird. Die Stützen 6 werden durch Rückhalteseile 8 an bergseitigen Verankerungen befestigt. Die Randstützen werden mit Abspannseilen an seitlichen Verankerungen befestigt. Der Stützenfuss 10 kann gelenkig mit einem Fundament 12 verbunden oder nur auf dieses abgestellt werden. In die Rückhalteseile 8 werden Bremselemente 14 integriert, die mit einer vorgewählten Bremskraft einen Bremsweg durchfahren und so die kinetische Energie abgefangener Steine oder Eismassen abbauen. Die Bremskraft ist dabei auf die zulässige Tragfähigkeit der Rückhalteseile 8 bzw. der Verankerungen 16 abgestimmt.

Figg. 3 bis 5 zeigen ein erfindungsgemässes Bremselement 14. In den Figg. 3 und 5 ist das Bremselement 14 in seiner Ausgangsform vor einer Beanspruchung dargestellt. Das Bremselement besteht aus einem Stahlprofil mit rundem (z.B. Durchmesser 45 mm) oder rechteckigem Querschnitt 20 (z.B. 60 x 25 mm) bevorzugt aus Baustahl und insbesondere bevorzugt aus St.37, das zu einer 3 bis 10 Windungen aufweisenden Spirale mit einem im Verhältnis zur Profilstärke bzw. zum mittleren Profildurchmesser sehr engen Durchmesser (z.B. 150 mm), aufgewickelt ist.

Fig. 5 zeigt den entsprechenden Längsschnitt durch die Spirale bei Verwendung eines Rechteckprofils.

Die Verbindung des Bremselementes 14 mit einem Rückhalteseil 8, einer Verankerung 16 oder einer Stütze 6 geschieht bei der Verwendung eines rechteckigen Querschnittes (Flacheisen) auf sehr einfache Art und Weise. An den beiden Enden 22, 23 der Spirale wird je ein Loch 25 in das Profil gebohrt, das geeignet ist, den Bolzen eines Schäkels, ein direkt eingeschlauftes Seil oder einen Bolzen bzw. eine Stahlbauschraube aufzunehmen. Bei Verwendung eines runden Querschnittes (Rundstab) für das Bremselement wird an dessen Enden je eine Lasche aus Flacheisen angeschweisst, worauf die Verbindungen analog zum Rechteckquerschnitt erfolgen.

Fig. 4 zeigt das Bremselement 14 nach einer Beanspruchung in seiner gestreckten Form.

Das Bremskraft 28-Bremsweg 29-Diagramm des Bremselementes zeigt gemäss Fig. 2 in der Startphase einen stetigen Anstieg auf eine vorgewählte Bremskraft 32, die anschliessend über den grössten Teil 34 des Bremsweges hinweg in etwa konstant bleibt bzw. leicht ansteigt und an dem Ende 36 des Bremsweges stetig auf die Bruchlast 40 des Seiles ansteigt. Dadurch erfährt die abgefangene und abzubremsende Stein- bzw. Eismasse 4 eine in etwa konstante Verzögerung und kommt so auf dem für die vorgewählte Bremskrafthöhe kürzest möglichen Bremsweg zum Stillstand. Die kinetische Energie wird dabei vom Bremselement vorwiegend als plastische Verformungsarbeit absorbiert.

Die zum Strecken der Spirale nötige Kraft (= Bremskraft) hängt einerseits von der Geometrie der Spirale, insbesondere von dem Verhältnis des Profildurchmessers zum Windungsdurchmesser, und andererseits von der Profilquerschnittsform und der Festigkeit des Stahls ab.

Die Bremskraft ist einerseits umso grösser, je grösser das Verhältnis von Profildurchmesser zu Windungsdurchmesser ist, andererseits kann bei grossem Verhältnis pro Windung weniger Bremsweg gespeichert werden.

Die erfindungsgemässe Spirale wird mit einem Verhältnis des effektiven bezw. des mittleren Profildurchmessers (Durchmesser des mit dem Profil flächengleichen Kreises) zum Windungsdurchmesser von ca. 1 : 2 bis 1 : 6 gewickelt, dabei werden die Randfasern des Profiles im Bereich von ca. 10 % bis 30 % gedehnt bezw. gestaucht und der Profilquerschnitt insgesamt wird verformt.

Um solche Verformungen mitmachen zu können, bedarf es eines sehr verformungsfähigen Stahles, wie z. B. St. 37 oder St. 52 (DIN 18800, 1990) mit Fliessgrenzen im Bereich von ca. 200 bis 400 N/mm², Festigkeiten im Bereich von 300 bis 600 N/mm² und Bruchdehnungen von ca. 20 % bis 30 %.

Da im Sinne einer effizienten Materialausnützung ein im Verhältnis zum eingesetzten Profil möglichst langer Bremsweg bei einer möglichst hohen Bremskraft erwünscht ist, muss einerseits das Verhältnis Profildurchmesser zu Windungsdurchmesser und andererseits die Fliessgrenze bezw. Festigkeit in Bezug auf Wickelbarkeit und Bremskraft beim Strecken optimiert werden.

Die Eigenschaften des vorgeschlagenen Stahls kommen bezüglich diesen an sich gegensätzlichen Anforderungen: niedrige Fliessgrenze bezw. Festigkeit zum Wickeln, hohe Fliessgrenze bezw. Festigkeit zum Strecken, entgegen, indem sich der Stahl beim Wickeln und/oder Strecken durch Kaltverfestigung um ca. 20 bis 50 % verfestigt.

Für eine Streckung pro Spiralwindung auf das 5 bis 15-fache des mittleren Profildurchmessers, ausgehend vom ungenutzten, fabrikneuen Zustand, muss an die Bremselemente 14 eine Kraft von 20 bis 40 % der Fliesskraft angelegt werden. Die Fliesskraft bezieht sich dabei auf den gestreckten Zustand und stellt das Produkt aus Fliessgrenze und Querschnittsfläche des verwendeten Profils dar.

Bekannte Bremselemente weisen zum Teil oder vorwiegend die Nachteile der Reibungsbremsen auf, die insbesondere im vorliegenden Anwendungsfall wegen des schnellen Ablaufes des Bremsvorganges und langer erforderlicher Bremswege stärker ins Gewicht fallen. Andere Bremselemente wiederum erweisen sich aus konstruktiven Gründen für die langen erforderlichen Bremswege als nachteilig.

Das vorgeschlagene Bremselement vermeidet diese Nachteile und ist zudem aus konstruktiver, anwendungstechnischer, funktionaler und wirtschaftlicher Sicht sehr vorteilhaft.

Aus der vorangehenden Beschreibung sind dem Fachmann Abwandlungen zugänglich, ohne den Bereich der Erfindung zu verlassen. Z.B. können anstelle der Vollprofile auch Hohlprofile, wie z.B. besonders bevorzugt dickwandige Stahlrohre, verwendet werden. Diese bieten insbesondere den interessanten Vorteil, dass bei der Durchführung des Rückhalteseiles durch das Profil die Verbindungen, wie sie bei den vorerwähnten Vollprofilen erforderlich sind, entfallen.

## Patentansprüche

1. Bremselement (14) zur Absorption kinetischer Energie in Auffangvorrichtungen (1) für bewegte Massen (4), insbesondere für Rückhalteseile (8) in Steinschlag- und/oder Eisschlagverbauungen, **dadurch gekennzeichnet, dass** das Bremselement im Wesentlichen aus einer schraubenförmigen Spirale aus plastisch verformbarem Material besteht, so dass durch Zug an den Enden der Spirale und die dabei auftretende Verformung Energie von der Spirale absorbierbar ist.

2. Bremselement (14) gemäss Anspruch 1, **dadurch gekennzeichnet, dass** das Material des Bremselementes bei Verformung eine Erhöhung der Dehnfestigkeit zeigt.

3. Bremselement (14) gemäss Anspruch 2, **dadurch gekennzeichnet, dass** es durch Biegen eines stabförmigen Körpers in die Spiralform mit einem Durchmesser hergestellt ist, der höchstens so gross ist, dass noch eine wirksame Verfestigung beim Biegen auftritt, insbesondere in den gedehnten bezw. gestauchten Randzonen, und der mindestens so gross ist, dass kein Bruch des Materials beim Biegen erfolgt, um eine kompakte Bauart bei hohem Widerstand gegen ein Strecken zu erzielen.

4. Bremselement (14) gemäss einem der Ansprüche 1 - 3, **dadurch gekennzeichnet, dass** die Spirale mindestens 2, bevorzugt 3 bis 10 Windungen aufweist.

5. Bremselement (14) gemäss einem der Ansprüche 1 - 4, **dadurch gekennzeichnet, dass** das Material des Bremselementes Stahl hoher Verformbarkeit ist, bevorzugt mit einer Fliessgrenze im Bereich von 200 bis 400 N/mm² und/oder einer Festigkeit von 300 bis 600 N/mm².

6. Bremselement (14) gemäss einem der Ansprüche 1 - 5, **dadurch gekennzeichnet, dass** es aus einem massiven Profil (20) besteht, wobei das Profil im zur Spirale gewundenen Zustand in Längsrichtung der Spirale einen grösseren Durchmesser als in radialer Richtung aufweist.

7. Bremselement (14) gemäss Anspruch 6, **dadurch gekennzeichnet, dass** der Durchmesser in Längsrichtung der Spirale mindestens doppelt so gross ist wie derjenige in radialer Richtung.

8. Bremselement (14) gemäss einem der Ansprüche 1 - 5, **dadurch gekennzeichnet, dass** es im Wesentlichen aus einem Profil besteht, dessen Querschnitt kreisförmig ist oder eine Rotationssymmetrie grösser als 2 aufweist, insbesondere einen im Wesentlichen gleichmässig polygonalen Querschnitt hat.

9. Bremselement (14) gemäss einem der Ansprüche 1 - 5, **dadurch gekennzeichnet, dass** die Spirale im Wesentlichen aus einem Rohr mit im Wesentlichen zentral angeordnetem Loch besteht, wobei der mittlere Durchmesser des Lochs bevorzugt höchstens die Hälfte des mittleren Durchmessers des Profils beträgt.

10. Bremselement (14) gemäss einem der Ansprüche 1 - 9, **dadurch gekennzeichnet, dass** die Kraft zur Streckung des Bremselementes vom unbenutzten Zustand um das 5 bis 15-fache des mittleren Profildurchmessers pro Spiralwindung im Bereich von 20 bis 40 % der Fliesskraft, berechnet als Produkt aus Fliessgrenze und Querschnittsfläche, liegt.

11. Bremselement (14) gemäss Anspruch 10, **dadurch gekennzeichnet, dass** die mittlere, für das Strecken der Spirale benötigte Kraft im mittleren Drittel von Dehnung 0 bis Bruch (40) 30 bis 150 kN beträgt.

12. Bremselement (14) gemäss einem der Ansprüche 1 - 11, **dadurch gekennzeichnet, dass** das Verhältnis des mittleren Profildurchmessers des stabförmigen Materials des Bremselementes zum Windungsdurchmesser der Spirale 1 : 2 bis 1 : 6 beträgt.

13. Bremselement (14) gemäss einem der Ansprüche 1 - 12, **dadurch gekennzeichnet, dass** es im Wesentlichen aus Stahl mit einer Fliessgrenze von 200 bis 400 N/mm², einer Festigkeit von 300 bis 600 N/mm² und/oder einer Bruchdehnung von 20 bis 30 % besteht, bevorzugt aus einem Stahl, der alle drei Merkmale aufweist.

14. Vorrichtung (1) zum Bremsen bewegter Massen (4) mit einer flächigen Auffangvorrichtung (2), die gegen die voraussichtliche Bewegungsrichtung der Massen mit seilartigen Rückhaltemitteln (8) verankert ist, wobei mindestens die Mehrzahl der Rückhaltemittel, bevorzugt im Wesentlichen alle Rückhaltemittel, mindestens ein Bremselement (14) gemäss einem der Ansprüche 1 - 13 aufweist bezw. aufweisen.

15. Verfahren zur Herstellung eines Bremselementes (14) gemäss einem der Ansprüche 1 - 14, **dadurch gekennzeichnet, dass** ein stabförmiges Profil zu einer schraubenförmigen Spirale gebogen wird, ohne dass das stabförmige Profil in einen leichter biegbaren Zustand versetzt wird.

16. Verfahren gemäss Anspruch 15, **dadurch gekennzeichnet, dass** das Profil aus Stahl besteht und das Biegen in kaltem Zustand erfolgt, um eine Verfestigung durch den Biegevorgang zu erzielen.
